**Europäisches Patentamt**

**European Patent Office**

**Office européen des brevets**

(19)

(11) Veröffentlichungsnummer: **0 122 548**
**B1**

(12) # EUROPÄISCHE PATENTSCHRIFT

(45) Veröffentlichungstag der Patentschrift:
03.02.88

(51) Int. Cl.⁴: **H 04 B 1/20**

(21) Anmeldenummer: **84103763.3**

(22) Anmeldetag: **05.04.84**

(54) Fernbedienungsgerät zur drahtlosen Steuerung verschiedener Geräte.

(30) Priorität: **14.04.33 DE 3313493**

(43) Veröffentlichungstag der Anmeldung:
**24.10.84 Patentblatt 84/43**

(45) Bekanntmachung des Hinweises auf die Patenterteilung:
**03.02.88 Patentblatt 88/5**

(84) Benannte Vertragsstaaten:
**AT BE CH DE FR GB IT LI LU NL SE**

(56) Entgegenhaltungen:
**EP-A-0 002 434**
**EP-A-0 117 121**
**GB-A-2 072 444**

**ELEKTRONIK, nr.23, November 1981, München, DE,
S.97-100; H.MOSER et al.: "Komplette
Bausteinfamilie für die PCM-IR-Fernbedienung"**

(73) Patentinhaber: **TELEFUNKEN Fernseh und
Rundfunk GmbH, Göttinger Chaussee 76, D-3000
Hannover 91 (DE)**

(72) Erfinder: **Schiering, Rolf, Remmenbreiten 3, D-3005
Hemmingen 4 (DE)**
Erfinder: **Platte, Hans-Joachim, Dr., Königsberger
Weg 22, D-3005 Hemmingen 4 (DE)**

(74) Vertreter: **Einsel, Robert, Dipl.-Ing., TELEFUNKEN
Fernseh und Rundfunk GmbH Göttinger
Chaussee 76, D-3000 Hannover 91 (DE)**

EP 0 122 548 B1

## Beschreibung

Die Erfindung betrifft ein Fernbedienungsgerät, insbesondere zur Steuerung von elektronischen Geräten des Unterhaltungselektronikbereiches, das jedes Gerät aus einer vorbestimmten Gruppe bekannter Geräte zu steuern vermag, ohne daß eine komplizierte Einstellung oder Umstellung des Fernbedienungsgerätes auf das vom jeweiligen Benutzer jeweils zu steuernde Gerät erfolgen muß. Das erfindungsgemäße Fernbedienungsgerät kann daher gut als kompatibles, gerätetyp- und herstellerunabhängiges Fernbedienungsgerät ausgeführt werden.

Bekannte Fernbedienungsgeräte sind durch den schaltungsmäßig vorweg festgelegten Fernsteuercode zumeist eindeutig auf die Steuerung eines bestimmten Gerätes eines bestimmten Herstellers fixiert. Für den Benutzer folgt hieraus, daß er zu jedem neuen Gerät ein neues spezielles Fernbedienungsgerät erwerben und in der Umgebung des Geräteaufstellortes, das ist bei Geräten der Unterhaltungselektronik in der Regel der unmittelbare Wohnbereich, betriebsbereit aufbewaren muß. Jedes neu erworbene Fernbedienungsgerät, selbst wenn es für ein zweites Gerät einer dem Benutzer bereits vertrauten Gerätegattung bestimmt ist, erfordert vom Benutzer wiederum eine Eingewöhnung: Er muß sich spezielle, zumeist nur konstruktiv bedingte Bedienungsbesonderheiten merken und diese von den Besonderheiten anderer bereits vorhandener Fernbedienungsgeräte dauerhaft unterscheiden. Selbst prinzipiell identische Funktionen, wie Senderwahl bei Empfangsgeräten oder Zeitprogrammierung bei uhrzeitgesteuerten Funktionen, sind von bekannten Fernbedienungsgeräten aus recht unterschiedlich zu bedienen. Diese Vielfalt verwirrt beim direkten Nebeneinander verschiedener Fernbedienungsgeräte selbst den technisch versierten Benutzer und führt zwangsläufig zu einer größeren Fehlbedienungshäufigkeit als nötig.

Durch die EP-A1-0 002 434 ist ein Fernbedienungsgerät bekannt, das zur einheitlichen und drahtlosen Steuerung verschiedener Geräte ein und der selben Gerätegattung, vorzugsweise aus dem Heimelektronik-Bereich, wie z. B. verschiedener Fernsehgeräte, Videorecorder oder Hifi-Anlagen, geeignet ist. Dieses Fernbedienungsgerät enthält Bedienungselemente für die Steuerung eines Gerätes der jeweiligen Gerätegattung und einen Steuercodegenerator, der bei Betätigung eines Bedienungselementes unterschiedliche Steuersignale erzeugen kann. Dadurch kann an jedem Gerät aus derselben Gerätegattung die dem betätigten Bedienungselement des Fernbedienungsgerätes zugeordnete Funktion ausgelöst werden. Der Steuercodegenerator ist dabei mit einer Code-Auswahlschaltung verbunden, die bei Vorliegen einer eindeutigen Information über das gerade zu steuernde Gerät der vorbestimmten Gerätegruppe mit Betätigung eines Bedienungselementes am Fernbedienungsgerät den jeweils gültigen Steuercode auswählt und das jenige Steuersignal generieren läßt, das die dem betätigten Bedienungselement des Fernbedienungsgerätes zugeordnete Funktionen am gerade zu steuernden Gerät auslöst.

Der Erfindung liegt die Aufgabe zugrunde, ein Fernbedienungsgerät der beschriebenen Art so weiterzubilden, daß das Fernbedienungsgerät bei seiner Inbetriebnahme weitestgehend selbsttätig und ohne umfangreiche Manipulation des Bedienenden den Code ermittelt, der für die Steuerung einer bestimmten Funktion eines Gerätes geeignet ist.

Diese Aufgabe wird durch die im Anspruch 1 beschriebene Erfindung gelöst. Vorteilhafte Weiterbildungen der Erfindung sind in den Unteransprüchen beschrieben.

Die Erfindung wird nachstehend anhand eines Ausführungsbeispiels näher erläutert. Es zeigen

Fig. 1 das prinzipielle Funktionsblockschaltbild des erfindungsgemäßen Fernbedienungsgerätes,

Fig. 2 das grundsätzliche Entscheidungsdiagramm zur Codebestimmung und Geräte-Identifikation während einer Inbetriebnahmephase,

Fig. 3 die prinzipielle Organisation der Code-Speichertabelle führ ein Videorecorder-Fernbedienungsgerät.

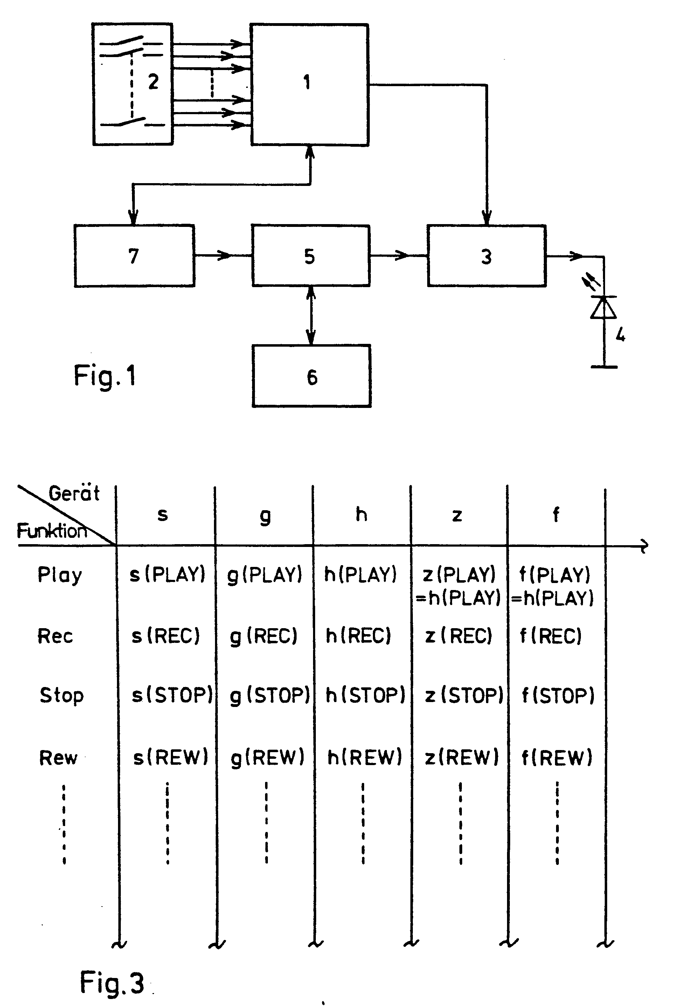

Fig. 1 zeigt das prinzipielle Funktionsblockschaltbild des erfindungsgemäßen Fernbedienungsgerätes. Ein Steuerwerk 1, das als Mikroprozessorsystem ausgeführt ist, setzt die vom Benutzer vorgenommenen Betätigungen der Bedienungselemente 2 in entsprechende schaltungs- oder programmtechnische Anweisungen an den Steuercode-Generator 3 um. Dieser generiert daraufhin Fernsteuersignale, welche über eine Infrarot-Sendediode 4 an das zu steuernde Gerät ausgesendet werden und dort diejenige Funktion auslösen, die dem vom Benutzer betätigten Bedienungselement am Fernbedienungsgerät zugeordnet war. Eine Besonderheit des Steuercode-Generators ist seine Eigenschaft, auf jede Anweisung des Steuerwerkes hin verschiedene Fernsteuersignale erzeugen zu können, die an verschiedenen Geräten einer vorbestimmten Gerätegruppe die der betätigten Fernbedienungstaste zugeordnete Funktion auslösen können.

Die Information, welche spezielle Codevorschrift jeweils zur Generierung eines Fernsteuersignals zu verwenden ist, erhält der Steuercode-Generator 3 von der Code-Auswahlschaltung 5. Diese wählt aus der Speichertabelle 6, in der alle möglichen Steuersignale nach den vorbestimmten Geräten gegliedert enthalten sind, jeweils nur eine Spalte mit den Steuersignalen für ein bestimmtes Gerät aus. Eine die Code-Auswahlschaltung steuernde Code-Bestimmungsschaltung 7 ermittelt und gibt dann vor, welches Gerät der vorbestimmten Gruppe jeweils anzusprechen und damit auch, welche Spalte der Code-Speichertaballe jeweils zur Erzeugung der Fernsteuersignale heranzuziehen ist.

Die Code-Bestimmungsschaltung 7 liefert nur dann eine die Codeauswahl durch die Schaltungsteile 5 und 6 ändernde Information, wenn aus spezieller Tastenbetätigung nach den Ansprüchen 3 und 4 eine Phase der Inbetriebnahme des Fernbedienungsgerätes mit einem speziellen zu steuernden Gerät oder mit einem anderen als vorher anzunehmen ist. In einer solchen Inbetriebnahmephase veranlaßt die Code-Bestimmungsschaltung 7, daß bei Betätigung eines Bedienungselementes nacheinander verschiedene gespeicherte Codes probiert werden, d.h. daß dem zu steuernden Gerät Steuersignale verschiedener Geräte aus der vorbestimmten Gruppe angeboten werden. Dieser Vorgang wird zunächst mit einem zufällig aus allen möglichen Steuersignalen ausgewählten Signal begonnen und später bei anderen Tastenbetätigungen ggf. so wiederholt, daß zielgerichtet nur noch Steuersignale aus einer Untermenge aller möglichen Signale ausprobiert werden. Die Inbetriebnahmephase endet automatisch dann, wenn die Untermenge der auszuprobierenden Steuercodes nur noch aus einem Code besteht, d.h. der Fernsteuercode des zu steuernden Gerätes zweifelsfrei und vollständig in der Menge der gespeicherten Codes identifiziert ist.

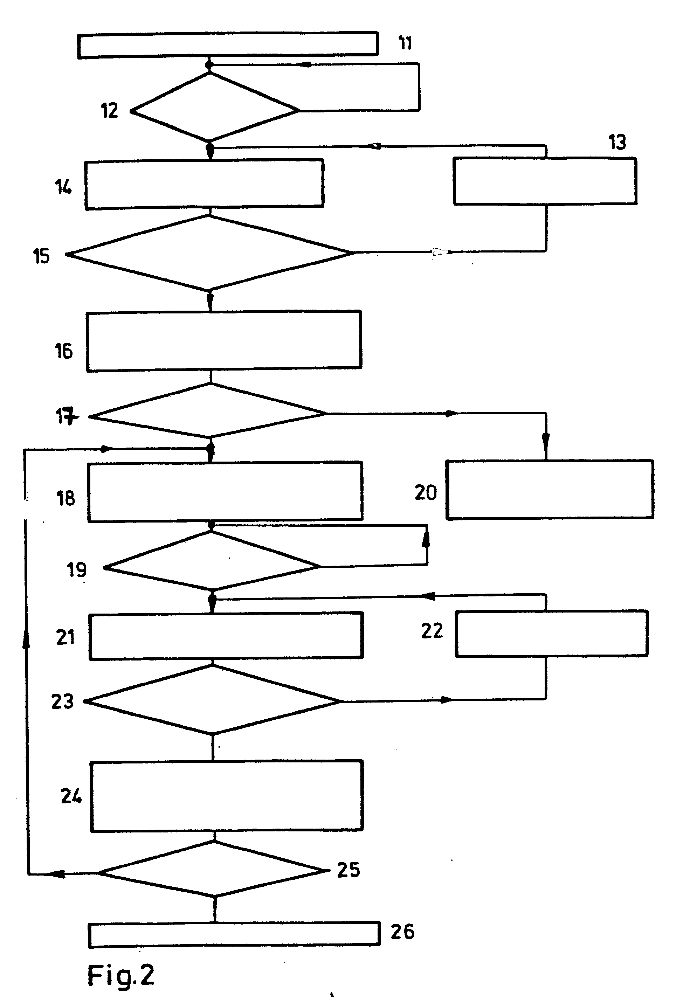

Fig. 2 zeigt das logische Ablaufschema des Codebestimmungsvorganges in der Inbetriebnahmephase. Der Codebestimmungsvorgang läuft wie folgt ab. Zu Beginn des Codebestimmungsvorganges wird die Inbetriebsphase 11 eingeleitet. In Block 12 wird abgefragt, ob eine Taste gedrückt ist. Dieser Vorgang wird solange wiederholt, bis eine Taste gedrückt wird. Danach wird in Block 14 probeweise ein in Frage kommendes Fernsteuersignal ausgesendet. Wird die jeweilige Funktion in Block 15 vom Benutzer quittiert, so wird in Block 16 die Codespeichertabelle geprüft, ob das vorprobierte Fernsteuersignal mehrfach darin enthalten ist. Wird dia Funktion in Block 15 nicht quittiert, wird der Codeumschalter 13 betätigt, und warden die Blöcke 14 und 15 so oft durchfahren, bis der Benutzer die Funktion quittiert. In Block 17 wird abgefragt, ob das probierte Fernsteuersignal mehrfach vorhanden ist. Ist dies nicht der Fall, ist die Inbetriebnahmephase beendet, Block 20. Ist das Fernsteuersignal mehrfach vorhanden, wird in Block 18 eine Untermenge des Codes registriert, in denen die festgestellten Mehrdeutigkeiten auftreten. Danach wird in dem Block 19 abgefragt, ob eine Taste gedrückt ist. Nach Drücken einer Taste wird in Block 21 probeweise ein Fernsteuersignal aus der Untermenge ausgesendet. Dann wird in Block 23 abgefragt, ob die jeweilige Funktion vom Benutzer quittiert wird. Ist dies nicht der Fall, wird in Block 22 eine Codeumschaltung innerhalb der Untermenge durchgeführt, und die Blöcke 21, 23 erneut durchfahren. Ist die Funktion quittiert worden, wird in Block 24 die Untermenge aus der Codespeichertabelle daraufhin geprüft, ob das vorher probierte Fernsteuersignal mehrfach darin enthalten ist. Ist dies der Fall, wird zu Block 18 zurückgesprungen, und die Abfrage beginnt von neuem. Ist dies nicht der Fall ist die Inbetriebnahmephase beendet. Ist der Code des jeweils zu steuernden Gerätes identifiziert, so endet die Funktion der Code-Bestimmungsschaltung und damit die Inbetriebsnahmephase. Nachfolgende Benutzereingaben werden dann automatisch nur noch in Steuersignale des ermittelten Codes umgesetzt. Mit einem gegen unbeabsichtigte Betätigung geschützten Bedienungselement kann der Benutzer wissentlich und willentlich die oben beschriebene Inbatriebnahmephase und den automatischen Übergang auf einen anderen, bis auf weiteres geltenden Fernsteuercodes wieder auslösen.

Fig. 3 zeigt als Beispiel einen schematisierten Ausschnitt aus der Code-Speichertabelle. Jede Zeile spezifiziert die Steuersignale aller vorbestimmten Geräte einer Gerätegattung für eine bestimmte Funktion. Jede Spalte enthält den für ein bestimmtes zu steuerndes Gerät gültigen Satz von Steuersignalen in einer geeigneten für den Steuercode-Generator verwendbaren Beschreibung. Wird nun am Beispiel der Fig. 3 eine Inbetriebnahmephase mit Betätigung der Taste "PLAY" begonnen, so werden automatisch nacheinander die Signale s(PLAY), g(PLAY), h(PLAY) usw. erzeugt und über die Infrarot-Sendediode 4 zum zu steuernden Gerät ausgesendet. Wird die in diesem Beispiel bis f(PLAY) fortzusetzende Folge von Steuerversuchen vom Benutzer nach h(PLAY) quittierend abgebrochen, so registriert die Code-Bestimmungsschaltung das Signal h(PLAY) als ein die Funktion "PLAY" am zu steuernden Gerät auslösendes Fernsteuersignal. Danach prüft die Code-Bestimmungsschaltung die folgenden Tabelleneinträge innerhalb der Zeile aller PLAY-Signale und dann sicherheitshalber auch noch die komplette restliche Tabelle auf evtl. Mehrdeutigkeiten des Steuersignals h(PLAY) für andere Geräte als nur Gerät h und auch für andere Funktionen anderer Geräte. Im Beispiel der Fig. 3 stimmt das Signal h(PLAY) innerhalb einer vorgegebenen Fehler- bzw. Unterscheidungsgrenze überein mit den Signalen z(PLAY) und f(PLAY) der hier mit z und f bezeichneten Geräte eines anderen Typs bzw. eines anderen Herstellers.

Nach diesem ersten Probierschritt wird mit einer nächsten Betätigung, hier z. B. der Taste STOP, probierend nur noch auf die Steuersignale h(STOP), z(STOP) und f(STOP) der Untermenge der 3 Geräte h, z und f zurückgegriffen, unter deren Steuersignalen die Mehrdeutigkeit von h(PLAY) des ersten Versuches festgestellt worden war. Probierend werden h(STOP), z(STOP) und f(STOP) dann an das zu steuernde Gerät ausgesendet. Bricht der Benutzer diesen zweiten Probiervorgang nach Aussendung von z(STOP) quittierend ab, so endet damit die Funktion der Code-Bestimmungsschaltung 7, da das quittierte Steuersignal z(STOP) mit keinem anderen in der Tabelle beschriebenen Steuersignal mehr übereinstimmt. Das zu steuernde Gerät gilt hiermit als eindeutig zu "z" identifiziert. In der Folge werden bis zu einer bewußt vom Benutzer eingeleiteten oder automatisch wieder begonnenen Inbetriebnahmephase bei Betätigung von Fernbedienungstasten nur noch die für das Gerät z in der entsprechenden Spalte der Fig. 3 spezifizierten Steuersignale verwendet.

**Patentansprüche**

1. Fernbedienungsgerät zur vorzugsweise drahtlosen Steuerung verschiedener Geräte einer Gerätegattung, vorzugsweise aus dem Heimelektronik-Bereich, wie z. B. verschiedener Fernsehgeräte, Videorecorder oder HiFi-Anlagen, wobei das Fernbedienungsgerät Bedienungselemente für die Steuerung eines Gerätes der jeweiligen Gerätegattung und einen Steuercodegenerator (3) enthält, der bei Betätigung eines Bedienungselementes (2) unterschiedliche Steuersignale erzeugen kann, die an dem Gerät einer Gruppe derselben Gerätegattung die dem betätigten Bedienungselement (2) zugeordnete Funktion auslösen, wobei ferner der Steuercodegenerator (3) mit einer Code-Auswahlschaltung (5) verbunden ist, die bei Vorliegen einer eindeutigen Information über das gerade zu steuernde spezielle Gerät der vorbestimmten Gerätegruppe mit Betätigung eines Bedienungselementes (2) am Fernbedienungsgerät den jeweils gültigen Steuercode auswählt und dasjenige Steuersignal generieren läßt, das die dem betätigten Bedienungselement (2) des Fernbedienungsgerätes zugeordnete Funktion am gerade zu steuernden Gerät auslöst, und wobei die Code-Auswahlschaltung (5) mit einer Code-Bestimmungsschaltung (7) verbunden ist, dadurch gekennzeichnet, daß während der Inbetriebnahmephase die Code-Bestimmungsschaltung (7) bei Betätigung eines Bedienungselementes so lange verschiedene infrage kommende Steuercode-Wörter zu dem zu steuernden Gerät aussendet, bis der Benutzer durch Loslassen des Bedienungselementes (2) oder durch Betätigung eines quittierenden Bedienungselementes (2) zu erkennen gibt, daß die gewünschte Funktion mit dem zuletzt ausgesendeten Steuercode-Wort ausgelöst wurde, und daß die Code-Bestimmungsschaltung (7) dann den entsprechenden Vorgang bei Betätigung anderer Bedienungselemente (2) so lange fortsetzt, bis die so ermittelten gültigen Steuercode-Wörter logisch eindeutig den kompletten Steuercode des jeweiligen zu steuernden Gerätes aus der Menge aller im Fernbedienungsgerät gespeicherten Codes identifizieren.

2. Gerät nach Anspruch 1, dadurch gekennzeichnet, daß während der Inbetriebnahmephase die Code-Bestimmungsschaltung (7) bei wiederholter Betätigung desselben Bedienungselementes (2) jeweils ein anderes der in Frage kommenden Steuercode-Wörter zum zu steuernden Gerät aussendet und aus dem Ende der Betätigungswiederholung schließt, daß die gewünschte Funktion mit dem zuletzt ausgesendeten Steuercode-Wort ausgelöst wurde, und daß die Code-Bestimmungsschaltung (7) dann den entsprechenden Vorgang bei Betätigung anderer Bedienungselemente (2) solange fortsetzt, bis die so ermittelten gültigen Steuercode-Wörter logisch eindeutig den kompletten Steuercode des jeweiligen zu steuernden Gerätes aus der Menge aller im Fernbedienungsgerät gespeicherten Codes identifizieren.

3. Gerät nach Anspruch 1 oder 2, dadurch gekennzeichnet, daß die Inbetriebnahmephase mit der speziellen Funktion der Code-Bestimmungsschaltung (7) jeweils automatisch dann wieder begonnen wird, wenn ein normalerweise nur kurzzeitig zu betätigendes Bedienungselement (2) signifikant länger betätigt wird.

4. Gerät nach einem oder mehreren der Ansprüche 1 - 3, dadurch gekennzeichnet, daß die Inbetriebnahmephase mit der speziellen Funktion der Code-Bestimmungsschaltung (7) jeweils automatisch dann wieder begonnen wird, wenn ein normalerweise nur einmal zu betätigendes Bedienungselement (2) in durch kein anderes Bedienungselement unterbrochener Folge wiederholt betätigt wird.

**Claims**

1. A remote control device preferably for the radio control of various apparatuses of a kind of apparatus, preferably in the home electronics range, such as various television sets, videorecorders or hi-fi installations for example, wherein the remote control device contains operating elements for the control of an apparatus of the particular type of apparatus and a control code generator (3) which, on actuation of an operating element (2), can generate different control signals which, at the apparatus of a group of the same kind of apparatuses, initiate the function associated with the operating element (2) actuated, wherein furthermore the control code generator (3) is connected to a code selection circuit (5) which, when clear information is present about the specific apparatus to be controlled in the predetermined group of apparatuses, on actuation of an operating element (2) at the remote control device, selects the particular valid control code and allows that control signal to the generated which initiates the function associated with the actuated operating element (2) of the remote control device at the particular apparatus to he controlled, and wherein the code selection circuit (5) is connected to a code determining circuit (7), characterised in that, during the setting-up phase, on actuation of an operating element, the code determining circuit (7) transmits various suitable control code words to the apparatus to be controlled until the user makes it clear, by releasing the operating element (2) or by actuation of an acknowledging operating element (2), that the desired function has been initiated by the control code word last transmitted, and that the code determining circuit (7) then continues the corresponding operation, on actuation of other operating elements (2), until the valid control code words thus determined logically and clearly identify the complete control code of the particular apparatus to be controlled out of the large number of all the codes stored in the remote control device.

2. A device according to Claim 1, characterised in that, during the setting-up phase, on repeated actuation of the same operating elemnt (2), the code determining circuit (7) transmits another of the suitable control code words each time to the apparatus to be controlled and concludes, from the end of the repeated actuation, that the desired function was initiated by the last control code word transmitted and that the code determining circuit (7) then continues the corresponding operation, on actuation of other operating elements (2) until the valid control code words thus determined logically and clearly identify the complete control code of the particular apparatus to be controlled out of the large number of all the codes stored in the remote contol device.

3. A device according to Claim 1 or 2, characterised in that the setting-up phase with the special function of the code determining circuit (7) is started again automatically each time when an operating element (2), which normally only has to be actuated briefly, is actuated for significantly longer.

4. A device according to one or more of the Claims 1 - 3, characterised in that the setting-up phase with the special function of the code determining circuit (7) is started again automatically each time when an operating element (2), which normally only has to be actuated once, is actuated repeatedly in a sequence uninterrupted by any other operating element.

**Revendications**

1. Boîtier de télécommande, destiné à la commande, de préférencesans fil, de plusieurs appareils d'une même espèce d'appareils, de préférence du domaine de l'électronique domestique comme par exemple différents télécommande comportant des touches de commande pour la commande d'un appareil correspondant, et un générateur de code de commande (3) qui peut produire par l'actionnement d'une touche de commande (2), différents signaux de commande déclenchant sur l'appareil d'un groupe de la même espèce, la fonction associée à la touche de commande (2) actionnée, le générateur de code de commande (3) étant en outre relié à un circuit sélecteur de code de commande (5) qui en présence d'une information sans équivoque concernant l'appareil déterminé à commander parmi le groupe d'appareils prédéfini, sélectionne dans le boîtier de télécommande le code de commande valable correspondant et génère celui des signaux de commande qui déclenche dans l'appareil à commander, la fonction associée à la touche de commande (2) actionnée sur le boîtier de télécommande, et dans lequel le circuit sélecteur de code (5) est relié à un circuit de détermination de code (7), caractérisé par le fait que pendant la phase de mise en service, le circuit de détermination de code (7) émet lors de l'actionnement d'une touche de commande, des mots code en direction de l'appareil à commander jusqu'au moment où l'utilisateur signale en relâchant la touche de commande (2), ou en actionnant une touche de commande (2) de validation que la fonction souhaitée a été déclenchée par le mot code de commande émis en dernier, et que le circuit de détermination de code (7) poursuit alors le processus correspondant lors de l'actionnement d'autres touches de commande (2), et ceci aussi longtemps que les mots code valables ainsi trouvés identifient, de manière logique et sans équivoque, le code de commande complet de l'appareil à commander correspondant parmi tous les codes mémorisés dans le boîtier de télécommande.

2. Dispositif selon la revendication 1, caractérisé par le fait que pendant la phase de mise en service, le circuit de détermination de code (7) suite à l'actionnement répété de la même touche de commande (2) émet a chaque fols un autre mot code de commande vers l'appareil à commander et qu'il conclut, lors de l'arrêt de l'actionnement répété que la fonction souhaitée a été déclenchée par le mot code de commande émis en dernier, et que le circuit de détermination de code (7) poursuit alors, par l'actionnement d'autres touches de commande (2), le processus correspondant, aussi longtemps que les mots code de commande n'ont pas identifié de manière univoque et logique, le code de commande complet de l'appareil à commander correspondant parmi tous les codes mémorisés dans la télécommande.

3. Dispositif selon la revendication 1 ou 2, caractérisé par le fait que la phase de mise en service avec accomplissement de la fonction spéciale du circuit de détermination de code (7) recommence toujours automatiquement lorsqu'une touche de commande (2), normalement actionnée brièvement, est actionnée de manière significativement plus longue.

4. Dispositif selon l'une ou plusieurs des revendications 1 à 3, caractérisé par le fait que la phase de mise en service avec accomplissement de la fonction spéciale du circuit de détermination de code (7), est chaque fois recommencée automatiquement lorsqu'une touche de commande (2) normalement actionnée une seule fois, est actionnée plusieurs fois de suite sans aucune interruption de la séquence par l'actionnement d'une autre touche de commande.

Fig.1

| Gerät Funktion | s | g | h | z | f |
|---|---|---|---|---|---|
| Play | s(PLAY) | g(PLAY) | h(PLAY) | z(PLAY) =h(PLAY) | f(PLAY) =h(PLAY) |
| Rec | s(REC) | g(REC) | h(REC) | z(REC) | f(REC) |
| Stop | s(STOP) | g(STOP) | h(STOP) | z(STOP) | f(STOP) |
| Rew | s(REW) | g(REW) | h(REW) | z(REW) | f(REW) |

Fig.3

Fig.2